# EUROPÄISCHE PATENTSCHRIFT

(11) **EP 0 973 010 B1**
(45) Veröffentlichungstag und Bekanntmachung des Hinweises auf die Patenterteilung: **16.08.2006**
(21) Anmeldenummer: 99110812.7
(22) Anmeldetag: 04.06.1999
(51) Int. Cl.: G01C 19/56

(54) **Mikromechanischer Drehratensensor mit Koppelstruktur**
Micromechanical rotation rate sensor with coupling structure
Capteur de vitesse de rotation micromécanique avec structure de connexion

(30) Priorität: 14.07.1998 DE 19831594
(43) Veröffentlichungstag der Anmeldung: 19.01.2000
(73) Patentinhaber: LITEF GmbH, 79115 Freiburg (DE)
(72) Erfinder: Ryrko, Bruno, 79276 Reute (DE); Zimmermann, Steffen, Dr., 79112 Freiburg (DE); Breng, Uwe, 79194 Gundelfingen (DE)
(74) Vertreter: Müller - Hoffmann & Partner

(56) Entgegenhaltungen:
- WO-A-96/38710
- US-A- 5 763 781

## Beschreibung

Die Erfindung betrifft einen mikromechanischen Drehratensensor basierend auf dem Coriolis-Prinzip, mit zwei jeweils in mindestens einer Waferschicht ausgebildeten und schichtartig übereinander in zwei parallelen Ebenen angeordneten und mittels eines elektrostatischen Antriebs zu Schwingungen senkrecht zu den Ebenen anregbaren plattenförmigen Schwingern.

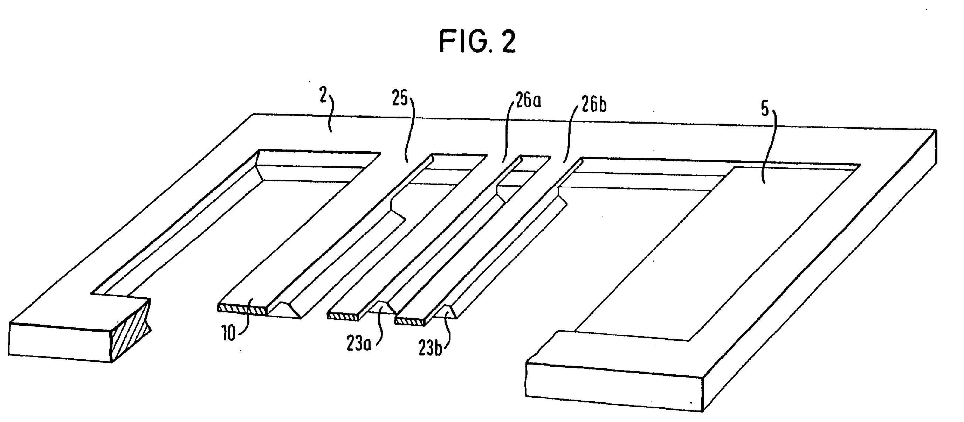

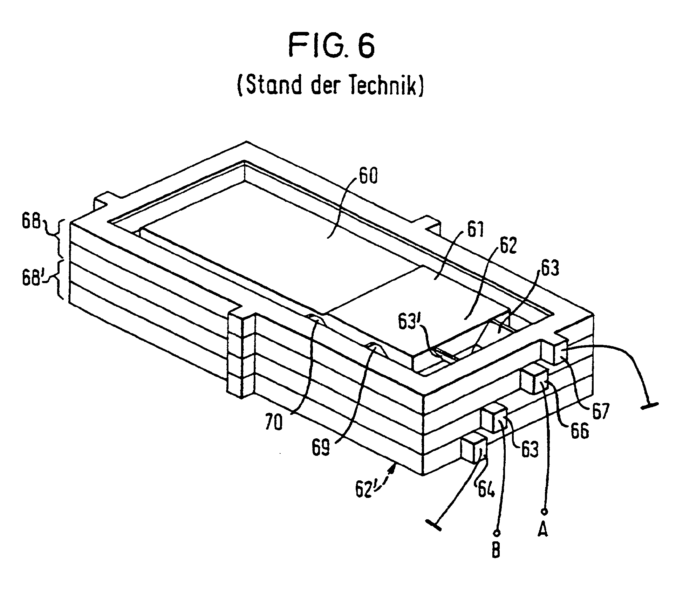

Ein mikromechanischer Drehratensensor mit den im vorstehenden Absatz angegebenen Merkmalen ist in der internationalen Patentanmeldung WO 96/38710 ausführlich beschrieben; auf diese Druckschrift wird voll inhaltlich Bezug genommen. Fig. 6 der beigefügten Zeichnungen veranschaulicht diesen Stand der Technik (vergleiche auch Fig. 9 der genannten WO-Druckschrift). Wie oben kurz umrissen, umfaßt ein solcher Drehratensensor zwei fluchtend und schichtartig übereinander angeordnete Schwinger, von denen in der Perspektivdarstellung der Fig. 6 der obere Schwinger 60 sichtbar ist. Dieser Schwinger 60 und entsprechend auch ein unterer spiegelsymmetrisch angeordneter und nicht sichtbarer Schwinger ist (jeweils) über eine erste Feder 70 an einen elektrostatischen plattenförmigen Antrieb 61 angelenkt, der seinerseits über eine zweite Feder 69 mit einem plattenförmigen Träger 62, über welchen die Drehratenauslesung erfolgt, verbunden ist. Die ganze reihenartig verbundene Anordnung aus Schwinger 60. Antrieb 61 und Träger 62 ist über ein Kreuzfedergelenk 63, 63' in einem Rahmen 68 gehalten. Es ist aus Fig. 6 ersichtlich, daß jede Schwingeranordnung 60, 61, 62 einschließlich des zugehörigen Rahmens 68 zweilagig, also aus einem Verbundwafer, unter Zwischenschaltung einer nicht dargestellten dünnen Isolationsschicht, beispiels aus SiO₂, hergestellt ist. Der obere zweilagige Rahmen 68 und der untere zweilagige Rahmen 68' umschließen also die gesamte aus vier Waferschichten hergestellte Schwingerstruktur, wobei über äußere, einstückig mit den Rahmen verbundene Anschlüsse 64 bis 67 unterschiedliche Potentiale zuführbar sind. Mit Durchführungen für die elektrostatische (kapazitive) Anregung, Signalauslesung und Rückstellung (im Falle eines Closed-Loop-Systems) versehene Deck- und Bodenwafer sind in Fig. 6 nicht gezeigt; es wird insoweit auf Fig. 2 der genannten WO-Druckschrift verwiesen. Der besondere Vorteil dieser zweilagigen Schwingerstruktur nach Fig. 6 besteht unter anderem darin, daß Störungen der Meßwerte durch Reaktionskräfte aufgrund von Schwingerbewegungen nicht auftreten, obwohl vergleichsweise große Schwingungsamplituden des Schwingers 60 bzw. des spiegelbildlich angeordneten Schwingers (in Fig. 6 nicht sichtbar) mit kleinen Kondensatorantriebsspalten im Bereich des Antriebs 61 realisierbar sind. Die Drehratenauslesung erfolgt ebenfalls kapazitiv über (nicht gezeigte) Flächenelektroden auf der Oberseite des Trägers 62 bzw. auf der Unterseite des spiegelbildlichen (hier nicht sichtbaren) unteren Trägers 62' mit entsprechenden Gegenelektroden am (nicht gezeigten) Deck- bzw. Bodenwafer. Das dargestellte Kreuzfedergelenk 63, 63' hat den Vorteil, daß rotatorische, durch Coriolis-Kräfte verursachte Bewegungen mit daraus folgenden Kapazitätsänderungen gut übertragen, dagegen horizontale und vertikale Schwingungen in diesem Bereich unterdrückt werden.

Bei dieser bekannten, anhand der Fig. 6 erläuterten Schwingerstruktur ist - wie erwähnt - die elektrostatische Anregung aufgrund des engen Antriebsspalts im Bereich des Antriebs 61 trotz erwünschter relativ großer Schwingungsamplituden erheblich erleichtert und mit vergleichsweise niedrigen Antriebsspannungen von wenigen Volt realisierbar.

Während einfache Schwingersysteme den Nachteil haben, daß die Reaktionskräfte in die Montagefläche des Drehratensensors abgeleitet werden, wobei Änderungen in der Steifigkeit Rückwirkungen auf das Meßsystem haben mit der Folge von Nichtwiederholbarkeiten des Nullpunkts und des Skalenfaktors, hat ein auch hier mit der Erfindung zu realisierender Doppelschwinger den Vorteil, daß deren Massen gegeneinanderschwingen und so nach außen keine Reaktionskräfte abgegeben werden. Es hat sich jedoch gezeigt, daß durch Toleranzen bei der Herstellung der Schwingermassen und der verschiedenen Federn die Schwingerfrequenzen mehr oder weniger unterschiedlich sind. Damit entstehen Probleme für die Antriebselektronik dadurch, daß man die Schwinger bei einer Mittenfrequenz betreiben muß, deren Amplituden je nach Schwingergüte sehr viel niedriger liegen und deren Phasen sich nicht eindeutig angeben lassen. Elektronische Lösungen, durch die sich beide Amplituden und die gegenseitigen Phasen erfassen lassen, sind aufwendig und störanfällig.

Der Erfindung liegt damit die Aufgabe zugrunde, einen mikromechanischen Drehratensensor gemäß der eingangs genannten Gattung so zu verbessern, daß eine streng gegenphasige Bewegung der beiden Schwinger erreicht wird.

Für mikromechanische Stimmgabelresonatoren, auch solche, die in ein- oder zweiachsigen Strukturen für Coriolis-Drehratensensoren vorgesehen sind, ist es aus US-A-5.763.781 bereits bekannt, herstellungsbedingte Abmessungstoleranzen, die zu einer Verschlechterung des Auslesesignals durch Asymmetrien in den Massen oder der Steifigkeit der gegenphasig schwingenden Stimmgabelzinken führen, durch mechanische Fußpunktverkopplung der Schwinger zu verringern. Für nebeneinander angeordnete plattenartige Resonatorpaare wird aus den gleichen Gründen auch eine mechanische Verkopplung der schmalseitigen Enden der beiden gegenphasigen Schwingerplatten vorgeschlagen. Bei mikromechanischen Komplettsystemen von Coriolis-Drehratensensoren, wie sie Gegenstand der Erfindung sind, bei denen für einen kompakten raumsparenden Aufbau wie oben beschrieben zwei plattenförmige Schwinger schichtartig übereinander angeordnet sind und der elektrostatische Antrieb (das Antriebs-Plattenpaar) sowie ein Auslese-Plattenpaar in den flachen Waferverbund integriert sind, eignet sich die aus der US-PS entnehmbare Anregung zur fußpunktseitigen Verkopplung nicht, da sie dem Bestreben zu möglichst großen Schwingeramplituden zuwiderläuft.

Ohne Beeinträchtigung der erwünschten hohen Schwingeramplituden bei kleinen Antriebsspalten und damit kleinen Antriebsspannungen löst die Erfindung das genannte, sich aus Fertigungstoleranzen bei den Schwingersystemen ergebende Problem dadurch, dass die beiden plattenförmigen Schwinger über jeweils mindestens eine Feder je mit einem in der oder den jeweils gleichen Waferschicht(en) ausgebildeten Koppelelement verbunden sind, wobei die Koppelelemente - bezogen auf eine Mittenebene zwischen den Schwingern - spiegelsymmetrisch zueinander konfiguriert und über einen zwischen den Koppelelementen angeordneten Koppelsteg miteinander zu einer Koppelstruktur für die Schwinger verbunden sind, wobei jedes Koppelelement aus zwei über mindestens eine Biegefeder miteinander verbundenen Einzelelementen besteht, und wobei die beiden so verbundenen Einzelelemente in einer oberen Waferschicht mit dem jeweils spiegelbildlich dazu angeordneten Einzelelement in der unteren Waferschicht über je mindestens einen der in einer Waferzwischenschicht ausgebildeten Koppelstege so miteinander verkoppelt sind, dass die dadurch verkoppelten Schwinger nur gegenphasig zu Schwingungen erregbar sind.

Vorteilhafte Weiterbildungen der besonders für die ätztechnische Strukturierung von Siliziumwafern geeigneten Koppelstruktur gemäß der Erfindung sind in weiteren abhängigen Patentansprüchen definiert.

Die Erfindung und vorteilhafte Einzelheiten werden nachfolgend unter Bezug auf ein erprobtes und derzeit bevorzugtes Ausführungsbeispiel der Erfindung anhand der Zeichnung näher erläutert. Es zeigen:
- **Fig. 1**: in schematischer Perspektivdarstellung die Strukturierung einer ersten (oberen) Waferschicht einer Schwingeranordnung eines Coriolis-Kreisels zur Drehratenmessung mit erfindungsgemäßen Merkmalen;
- **Fig. 2**: eine mittlere, unter der oberen Schwingeranordnung gemäß Fig. 2 angeordnete Waferstruktur (Waferzwischenschicht);
- **Fig. 3**: die schematische Perspektivdarstellung einer Schwingeranordnung innerhalb eines nur schematisch angedeuteten Rahmens, jedoch ohne elektrostatischen Antrieb zur besseren Verdeutlichung der wesentlichen Merkmale der Erfindung;
- **Fig. 4**: eine schematische Schnittdarstellung durch die Schwingeranordnung gemäß Fig. 3;
- **Fig. 5**: eine (überzeichnete) topologische Wiedergabe der räumlichen Verformung einer Koppelstruktur innerhalb der Schwingeranordnung nach Fig. 3 als Ergebnis einer numerischen Schwingungssimulation; und
- **Fig. 6**: die bereits erläuterte mikromechanische Drehratenmeßanordnung nach dem Stand der Technik entsprechend der genannten WO-Druckschrift.

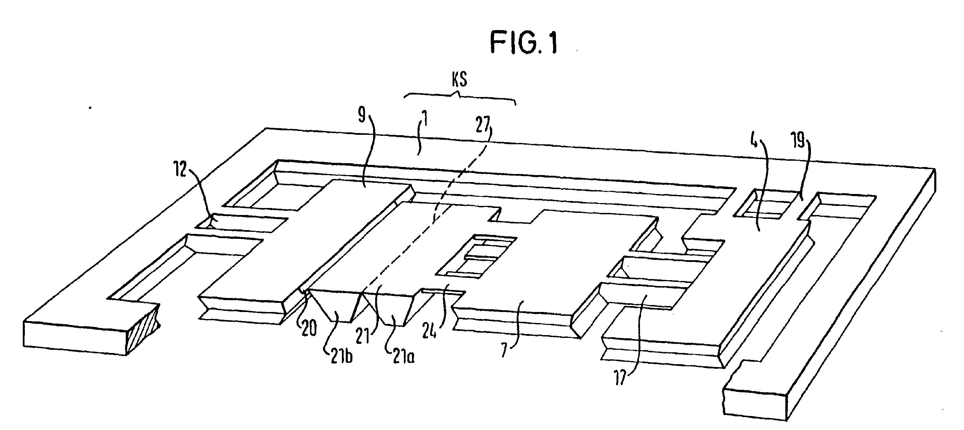

Die Perspektivdarstellung der Fig. 1 zeigt, hergestellt aus einem einzigen Wafer, einen Rahmen 1, in dem - von links nach rechts - über ein Federgelenk 12, beispielsweise ein Kreuzfedergelenk, ein für die Drehratenauslesung dienender plattenförmiger Träger 9, eine daran über mindestens eine Feder 20 angelenkte Koppelstruktur KS, die über eine oder mehrere Federn 24 an einen plattenförmigen Schwinger 7 angelenkt ist, der wiederum über eine Feder, beispielsweise eine Biegefeder 17 mit einem plattenförmigen Antriebselement 4 verbunden ist, das seinerseits über eine oder mehrere Biegefedern 19 im Rahmen 1 gehalten ist. Die Anlenkung des Antriebselements 4 innerhalb des Rahmens kann entweder - wie dargestellt - seitlich oder stirnseitig erfolgen. Die Federn 12 bzw. 17, sofern als Dreh- bzw. sich kreuzende Federgelenke gestaltet, haben die bereits erwähnten Vorteile. Denkbar und verwendbar sind jedoch auch anders gestaltete Federelemente. Im dargestellten Beispiel ist die Masse des Schwingers 7 etwa im Flächenschwerpunkt der elektrostatischen Antriebsplatte 4 angelenkt, was bei der Schwingungsanregung zu vorteilhaften Resonanzbedingungen führt, weil der Antrieb an einer (eventuellen) Drehbewegung nicht teilnimmt. Eine andere Anlenkung, beispielsweise bei voller Antriebsplatte 4 an deren Rand, wie im Stand der Technik bekannt, ist jedoch auch möglich, gegebenenfalls mit Optimierungsvorteilen hinsichtlich der erforderlichen Antriebsleistung.

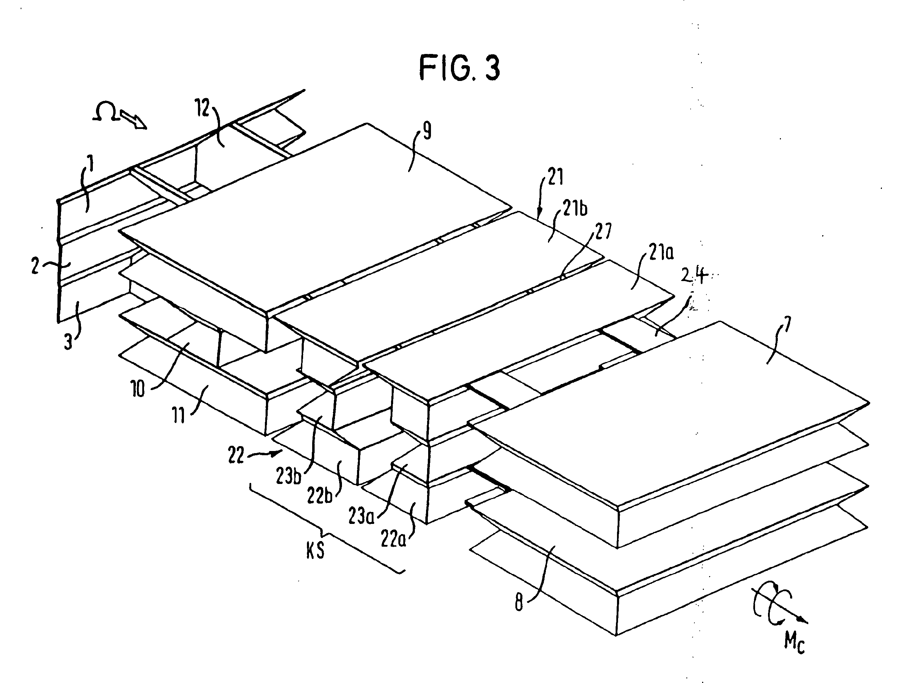

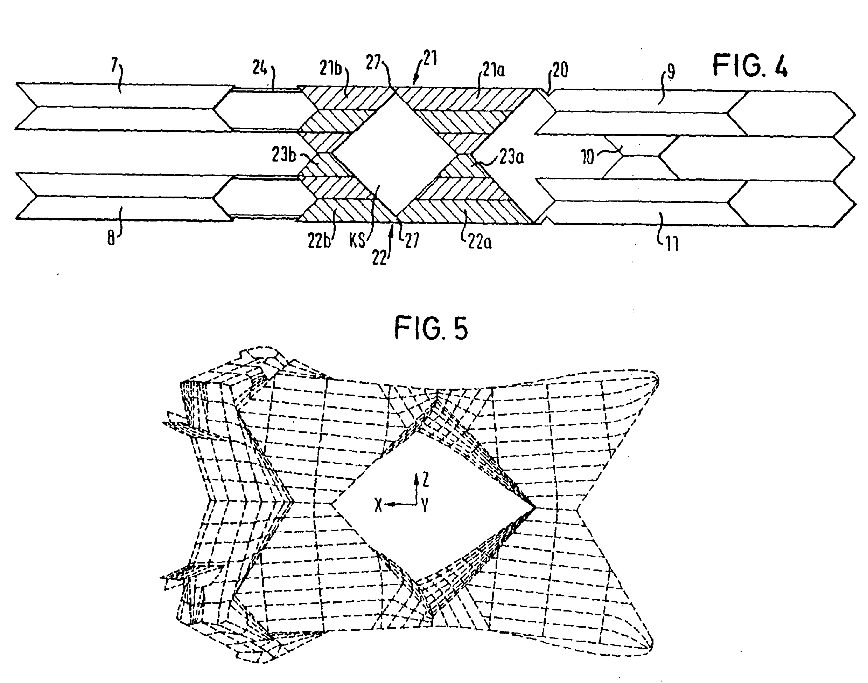

Wesentlich im Zusammenhang mit der vorliegenden Erfindung ist die Koppelstruktur KS (vergleiche Fig. 3 und 4), durch welche Anregungen der Masse des einen (oberen) Schwingers 7 streng gegenphasig auf die Masse des anderen (unteren) Schwingers 8 (vergleiche Fig. 4) übertragen werden und vice versa. Die Koppelstruktur KS besteht in der oberen und unteren Waferschicht aus einem Koppelelement 21, das seinerseits aus zwei in der Waferschicht liegenden Einzelelementen 21a, 21b besteht, die über mindestens eine Biegefeder 27 miteinander verbunden sind. Senkrecht zur Schicht des einen (oberen) Wafers sind die zur Innenseite abgeschrägten Einzelelemente 21a, 21b des Koppelelements 21 über jeweils in einer mittleren Waferschicht ausgebildete Koppelstege 23a, 23b mechanisch mit den entsprechenden spiegelbildlich dazu angeordneten Einzelelementen 22a, 22b des anderen (unteren) Koppelelements 22 verbunden.

Die Fig. 2 zeigt die mittlere Waferschicht mit einem Rahmen 2, in dem auf der rechten Seite ein über die Rahmenbreite sich erstreckendes feststehendes Plattenantriebselement 5 ausgebildet ist, über das bei Anlegen einer Antriebsspannung der elektrostatische Antrieb erfolgt, wobei aufgrund der Verwendung des mit dem Rahmen 2 einstückig verbundenen Plattenantriebselements 5 zum oberen Antriebsplattenelement 4 bzw. zu dessen Pendant auf der Unterseite ein erwünschter schmalen Antriebsspalt festgelegt ist. Die Fig. 2 läßt erkennen, daß die Koppelstege 23a, 23b zunächst, also vor dem Verbonden der drei Waferschichten, über schmale Federn oder Stege 26a bzw. 26b mit dem Rahmen 2 verbunden sind. Diese Stege 26a, 26b werden ebenso wie ein Steg 25, der ein Zwischenträgerelement 10 zunächst hält, zwischen dem oberen Träger 9 und dem unteren Träger 11 nach dem Verbonden durchtrennt bzw. entfernt.

Die besonderen Vorteile der Erfindung sind die folgenden:

Für eine hohe Empfindlichkeit des mikromechanischen Drehratensensors sind durch die erwünschten sehr engen Antriebsspalte zwischen dem (feststehenden) Plattenantriebselement 5 in der mittleren Waferschicht und dem oberen beweglichen Plattenantriebselement 4 bzw. dessen unterem Gegenstück sehr niedrige Gasdrücke im Inneren der gekapselten Drehratensensoranordnung erforderlich. Damit sind zwangsläufig hohe Schwingergüten verbunden. Insbesondere bei hohen Schwingergüten jedoch bereitet eine elektronisch erzwungene Gegentaktschwingung erhebliche schaltungstechnische Schwierigkeiten und/oder den Verzicht auf eine für höhere Genauigkeiten erforderliche ausreichende Schwingeramplitude. Mit der Erfindung wird strenge Gegenphasigkeit der beiden Schwinger 7, 8 erreicht, bei einer inhärent hohen Schwingungsstabilität.

Für Coriolis-Drehratensensoren gemäß der Erfindung lassen sich bei hoher Schwingergüte trotz abweichender Schwingermassen bzw. abweichender Federkonstanten sehr gute Stabilitäten der Schwingeramplituden durch erzwungene Gegenphasigkeit erreichen.

## Patentansprüche

1. Mikromechanischer Drehratensensor basierend auf dem Coriolis-Prinzip, mit zwei jeweils in mindestens einer Waferschicht ausgebildeten und schichtartig übereinander in zwei parallelen Ebenen angeordneten und mittels eines elektrostatischen Antriebs (4, 5) zu Schwingungen senkrecht zu den Ebenen anregbaren plattenförmigen Schwingern (7, 8), **dadurch gekennzeichnet, dass**
- die beiden plattenförmigen Schwinger (7, 8) über jeweils mindestens eine Feder (24) je mit einem in der oder den jeweils gleichen Waferschicht(en) ausgebildeten Koppelelementen (21, 22) verbunden sind, wobei die Koppelelemente bezogen auf eine Mittenebene zwischen den Schwingern (7, 8) spiegelsymmetrisch zueinander konfiguriert und über einen zwischen den Koppelelementen (21. 22) angeordneten aus zwei Koppelstegelementen (23a, 23b) bestehenden Koppelsteg (23) miteinander zu einer Koppelstruktur (KS) für die Schwinger (7, 8) verbunden sind, wobei
- jedes Koppelelement (21, 22) aus zwei über mindestens eine Biegefeder (27) miteinander verbundenen Einzelelementen (21a, 21b, 22a, 22b) besteht, und dass
- die beiden so verbundenen Einzelelemente (21a, 21b) in einer oberen Waferschicht mit dem jeweils spiegelbildlich dazu angeordneten Einzelelement (22a, 22b) in der unteren Waferschicht über je mindestens einen der in einer Waferzwischenschicht ausgebildeten Koppelstegelemente (23a, 23b) so miteinander verkoppelt sind, dass die dadurch verkoppelten Schwinger (7, 8) nur gegenphasig zu Schwingungen erregbar sind.

2. Mikromechanischer Drehratensensor nach Anspruch 1, **dadurch gekennzeichnet, dass** die Koppelelemente (21, 22)-innerhalb eines Rahmens (1, 3) jeweils zwischen einem plattenartigen, zur Drehratensignalauslesung dienenden Träger (9, 11) und dem zugeordneten Schwinger (7, 8) angeordnet sind, der seinerseits mit einer elektrostatisch bewegbaren Antriebsplatte (4, 5) über mindestens eine Feder (17) verbunden ist.

3. Mikromechanischer Drehratensensor nach Anspruch 2, **dadurch gekennzeichnet, dass** der Anlenkpunkt der Federverbindung zwischen dem elektrostatischen Antrieb (4, 5) und dem zugeordneten Schwinger (4) auf der Seite der jeweiligen Antriebsplatte (4) etwa in deren Flächenschwerpunkt liegt, so dass der Antrieb (4, 5) von einer eventuellen Drehbewegung weitgehend unbeeinflusst bleibt.

## Claims

1. Micro-mechanical rate-of-rotation sensor based on the Coriolis principle, having two plate-like oscillators (7, 8) which are each formed in at least one wafer layer, are arranged in layers one above another in two parallel planes and can be stimulated to oscillate perpendicular to the planes by means of an electrostatic drive (4, 5), **characterized in that**
- the two plate-like oscillators (7, 8) are each connected via at least one spring (24) to a couple element (21, 22) formed in the same wafer layer(s) in each case, the couple elements being mirror-symmetrically configured with respect to a midplane between the oscillators (7, 8) and being connected to each other by a coupling web (23) comprised of two coupling web elements (23a, 23b) and arranged between the couple elements (21, 22) to form a couple structure (KS) for the oscillators (7, 8),
- each couple element (21, 22) comprises two individual elements (21a, 21b, 22a, 22b) connected to each other via at least one bending spring (27), and
- the two individual elements (21a, 21b) connected in this way in an upper wafer layer and the respective individual element (22a, 22b) that is arranged mirror-symmetrically thereto in the lower wafer layer are connected to each other via in each case at least one of the coupling web elements (23a, 23b) formed in an intermediate wafer layer such that the oscillators (7, 8) coupled thereby can be stimulated to oscillate only in antiphase.

2. Micro-mechanical rate-of-rotation sensor according to Claim 1, **characterized in that** the couple elements (21, 22) are arranged inside a frame (1, 3), in each case between a plate-like support (9, 11) serving to read out the rate-of-rotation signal, and the associated oscillator (7, 8), the latter being connected in turn, by at least one spring (17), to an electrostatically movable drive plate (4, 5).

3. Micro-mechanical rate-of-rotation sensor according to Claim 2, **characterized in that** the articulation point of the spring connection between the electrostatic drive (4, 5) and the associated oscillator (4) is located on the side of the respective drive plate (4), approximately at is area center of gravity, so that the drive (4, 5) remains largely uninfluenced by any possible rotational movement.

## Revendications

1. Capteur micromécanique de vitesse de rotation basé sur le principe de Coriolis, comprenant deux oscillateurs en forme de plaques (7, 8) formés respectivement dans au moins une couche de tranche, et disposés d'une manière superposée sous la forme de couches dans deux plans parallèles et pouvant être amenés à osciller perpendiculairement aux plans à l'aide d'un dispositif d'entraînement électrostatique (4, 5), **caractérisé en ce que**
- les deux oscillateurs en forme de plaques (7, 8) sont reliés par l'intermédiaire respectivement d'au moins un ressort (24) à respectivement un élément de couplage (21, 22) formé dans l'une ou l'autre des mêmes couches de tranche, les éléments de couplage étant configurés symétriquement par rapport à un plan médian entre les oscillateurs (7, 8) et étant reliés entre eux pour former une structure de couplage (KS) pour les oscillateurs (7, 8) par l'intermédiaire d'une barre de couplage (23) disposée entre les éléments de couplage (21, 22) et constitués par deux éléments de barre de couplage (23a, 23b), dans lequel
- chaque élément de couplage (21, 22) est formé deux éléments individuels (21a, 21b, 22a, 22b) reliés entre eux par l'intermédiaire d'au moins un ressort de flexion d'un ressort spiral (27), et
- que les deux éléments individuels (21a, 21b) ainsi reliés sont couplés entre eux dans une couche de tranche supérieure comportant l'élément individuel (22a, 22b) disposé respectivement symétriquement par rapport à cet élément et dans la couche inférieure de tranche par l'intermédiaire respectivement d'au moins un élément de barrette de couplage (23a, 23b) formée dans une couche intercalaire de tranche, de telle sorte que les oscillateurs (7, 8) ainsi couplés peuvent être amenés à osciller uniquement en opposition de phase.

2. Capteur micromécanique de vitesse de rotation selon la revendication 1, **caractérisé en ce que** les éléments de couplage (21, 22) sont disposés à l'intérieur d'un cadre (1, 3) respectivement entre un support en forme de plaque (9, 11), utilisé pour la lecture du signal de vitesse de rotation, et l'oscillateur associé (7, 8), qui pour sa part est relié par l'intermédiaire d'au moins un ressort (17) à une plaque d'entraînement (4, 5) déplaçable de façon électrostatique.

3. Capteur micromécanique de vitesse de rotation selon la revendication 2, **caractérisé en ce que** le point d'articulation de la liaison élastique entre le dispositif d'entraînement électrostatique (4, 5) et l'oscillateur associé (4) est situé du côté de la plaque d'entraînement respectif (4) par exemple au niveau de son centre d'inertie, de telle sorte que le dispositif d'entraînement (4, 5) reste dans une large mesure non influencé par un éventuel mouvement de rotation.
